# FASCICULE DE BREVET EUROPEEN

(11) **EP 2 517 436 B1**
(45) Date de publication et mention de la délivrance du brevet: **18.12.2019**
(21) Numéro de dépôt: 10810774.9
(22) Date de dépôt: 20.12.2010
(51) Int. Cl.: H04L 29/06

(54) **COMMUNICATION PAIR À PAIR EN FONCTION DE LA CAPACITÉ DE TRANSMISSION**
PEER TO PEER KOMMUNIKATION ABHÄNGIG VON ÜBERTRAGUNGSFÄHIGKEITEN
PEER TO PEER COMMUNICATION DEPENDENT ON TRANSMISSION CAPABILITIES

(30) Priorité: 22.12.2009 FR 0959421
(43) Date de publication de la demande: 31.10.2012
(73) Titulaire: Orange, 75015 Paris (FR)
(72) Inventeur: MATHIEU, Bertrand, F-22560 Pleumeur Bodou (FR); PARIS, Pierre, F-22300 Lannion (FR); PELTIER, Jean-François, F-22300 Ploumilliau (FR)
(74) Mandataire: Plasseraud IP
(86) Numéro de dépôt international: PCT/FR2010/052819
(87) Numéro de publication internationale: WO 2011/086274

(56) Documents cités:
- US-A1- 2003 182 421
- US-A1- 2005 053 000
- US-A1- 2006 176 836
- US-A1- 2008 301 214
- US-A1- 2009 100 128

## Description

L'invention se rapporte au domaine des transmissions dans les réseaux, et plus particulièrement dans les réseaux poste-à-poste, encore référencés réseaux pair à pair ou réseaux P2P.

Un réseau pair à pair repose sur une technologie d'échange direct de données entre des ordinateurs ou pairs qui sont reliés entre eux via des ressources de transmission d'un réseau ou plusieurs réseaux de communication physiques. Un tel réseau P2P permet donc une communication directe entre une pluralité d'ordinateurs sans transiter par un serveur central.

Plus précisément, les réseaux P2P utilisent des ressources de transmission des réseaux de communication physiques sous-jacents. Ainsi, les transmissions effectuées sur les réseaux de communication de type P2P peuvent avoir des impacts sur le ou les réseaux physiques sous-jacents correspondant aux ressources de transmission utilisées.

Dans un réseau P2P, les pairs communiquent et se partagent des ressources, par exemple des capacités de calcul, des contenus numériques ou des éléments d'information.

De manière générale, les communications P2P sont basées sur des principes de communication visant à favoriser dans les échanges les pairs qui ont déjà contribué dans le réseau P2P, notamment en échangeant une grande quantité de données. Plus précisément, il est prévu qu'un pair sollicité puisse décider de transmettre ou non un contenu numérique requis en fonction de la quantité de données de type P2P déjà reçues depuis le pair qui lui requiert ce contenu numérique. Dans ce contexte, des pairs actifs dans le réseau P2P pour fournir des contenus numériques sont favorisés pour recevoir d'autres contenus numériques, alors que les pairs qui ne transmettent que relativement peu de données ne sont pas traités comme prioritaires pour recevoir des contenus numériques.

De fait, dans ce type de réseau P2P, les pairs qui fournissent peu sont défavorisés. En procédant ainsi, les pairs qui sont très actifs dans la transmission de données P2P sont privilégiés quant à la réception de contenus numériques requis par rapport aux pairs qui ont décidé de ne pas partager les contenus numériques dont ils disposent. On évite ainsi les 'free-riders', c'est-à-dire les pairs qui souhaiteraient profiter du réseau P2P et recevoir des contenus numériques sans avoir à transmettre leurs propres contenus numériques en échange.

Toutefois, dans certaines conditions, ces principes de communication pénalisent certains pairs de manière regrettable.

La présente invention vient améliorer la situation.

L'invention est définie dans les revendications indépendantes.

Plus précisément, le niveau de capacité de transmission d'un terminal correspond à au moins une caractéristique de transmission attachée au terminal et dépend au moins d'un type de réseau physique sous-jacent auquel le terminal appartient.

Dans ce contexte, des terminaux peuvent s'échanger des données de manière directe de pair à pair. Ainsi, un terminal qui souhaite recevoir un contenu numérique peut en faire la demande auprès d'un ou plusieurs autres terminaux de manière directe. Chacun de ces terminaux peut ensuite prendre la décision de donner suite à cette requête en transmettant tout ou partie du contenu numérique requis ou encore peut prendre la décision de refuser cette transmission requise. Il est ici avantageusement prévu qu'une classe soit allouée à chaque terminal de ce réseau de communication de type P2P, de sorte à lui associer un niveau de capacité de transmission.

On entend par le terme 'terminal' tout type de terminal adapté pour transmettre et/ou recevoir un flux de données correspondant à la transmission d'un contenu numérique. Un tel terminal peut être un ordinateur, un téléphone mobile, etc ...

On entend par les termes 'niveau de capacité de transmission', une valeur qui indique la capacité en transmission de données d'un terminal, c'est-à-dire les caractéristiques de ce terminal au regard des débits de données qu'il est en mesure de transmettre. La capacité en transmission d'un terminal peut dépendre de divers paramètres. Aucune limitation n'est attachée au type de paramètres qui peuvent être pris en compte pour déterminer une telle valeur.

En prenant ainsi en considération des caractéristiques de transmission attachées à chaque terminal, on est en mesure de pondérer en quelque sorte les décisions d'acceptation ou de rejet de transmission de contenu numérique.

La présente invention peut être appliquée à un protocole de communication P2P qui repose sur le fait de favoriser les requêtes de contenus numériques émanant de terminaux à forte contribution de type P2P par rapport aux requêtes de ceux qui ont une faible contribution dans le réseau P2P. Dans ce cas, il est avantageusement prévu de pouvoir pondérer ce comportement en prenant également en compte le fait que certains terminaux ne transmettent que peu de données dans le réseau P2P uniquement parce que leur capacité de transmission est limitée.

Ce type de pondération est avantageux notamment lorsque des disparités existent au sein du réseau P2P considéré entre les différents terminaux au regard de leur capacité de transmission.

En effet, la prise en compte de cette capacité de transmission allouée ou attachée à chaque terminal permet avantageusement de distinguer les terminaux qui pourraient transmettre plus mais qui ne le font pas 'volontairement', de ceux qui transmettent peu parce qu'ils n'en ont pas les capacités. Grâce à la prise en compte de ce niveau de capacité de transmission de chaque terminal, on est mesure d'appliquer un traitement différent selon les cas en fonction par exemple des applications qui sont mises en œuvre dans le réseau P2P considéré.

On peut ici aisément favoriser la transmission d'un contenu numérique à un terminal qui a une faible capacité de transmission par rapport à un terminal qui a une grande capacité de transmission, dans le cas notamment où les deux terminaux considérés auraient dans le passé transmis des quantités de données de type P2P à peu près similaires. Cela consisterait donc à traiter en priorité les terminaux qui ont une capacité de transmission limitée, à contribution de données P2P égale.

Aucune limitation n'est attachée à la présente invention au regard du mécanisme mis en œuvre pour allouer une classe à un terminal du réseau P2P. On peut envisager une allocation centralisée de cette valeur de capacité de transmission.

Il convient de prévoir dans un mode de réalisation de la présente invention de protéger cette allocation de classe à un terminal contre toute modification non contrôlée ultérieure. En effet, il est important de ne pas laisser un utilisateur d'un terminal libre de modifier la classe qui lui est associée de telle sorte à se faire passer pour un terminal limité en capacité de transmission alors que ce n'est pas le cas. A cet effet, il peut être prévu d'allouer une classe à un terminal de manière automatique sans aucune intervention d'un utilisateur et sans que ce dernier ne puisse intervenir par la suite sur la classe allouée. Ainsi, on peut prévoir une application P2P qui veille elle-même à déterminer un niveau de capacité de transmission, par exemple par analyse du type de terminal et/ou de type de réseau physique sous-jacent sur lequel il communique.

On peut également prévoir qu'un terminal pair distant recevant une requête de contenu numérique indiquant une classe soit en mesure de déterminer si la classe indiquée par le terminal émetteur de la requête est cohérente avec ce terminal émetteur. A cet effet, le terminal émetteur est en mesure d'évaluer la capacité de transmission du terminal émetteur de la requête.

Dans un mode de réalisation, il peut être prévu un serveur central dans le réseau qui est en charge de contrôler les capacités de transmission annoncées par un terminal du réseau, sur la base notamment du type de terminal et/ou du réseau d'accès sur lequel ce terminal s'est déclaré.

La présente invention peut avantageusement être appliquée de manière pertinente à un réseau P2P disparate au regard de la transmission, c'est-à-dire qui présente des disparités entre terminaux qui peuvent communiquer entre eux en ce qui concerne leur capacité de transmission. On entend ici par les termes 'réseau disparate' un réseau dans lequel les terminaux n'ont pas la même capacité de transmission, que cette différence de capacité soit attachée au type de réseaux physiques sous-jacents auxquels les terminaux appartiennent respectivement ou encore que cette différence de capacité de transmission soit propre au terminal lui-même.

Ainsi, dans un mode de réalisation de la présente invention, les terminaux du réseau pair à pair appartiennent à des réseaux physiques sous-jacents de types respectifs différents et le niveau de capacité de transmission d'un terminal correspond au moins à un type de réseau. Ce type de réseau P2P est un réseau hétérogène dans lequel les terminaux n'ont pas les mêmes contraintes de bande passante de transmission selon le réseau physique auquel ils appartiennent.

Dans ce cas, la présente invention trouve une application astucieuse permettant la mise en place d'un réseau de type P2P fondé sur une pluralité de réseaux physiques de types différents, qui peuvent limiter la capacité de transmission de leurs terminaux respectifs à des valeurs différentes. Tel est le cas notamment lorsqu'un réseau P2P se construit à la fois sur un réseau physique de type mobile à bas débit, un réseau de type Internet bas-débit, un réseau mobile de type 3G, un réseau de type ADSL pour « Asymmetric Digital Subscriber Line », un réseau mobile de type 4G, un réseau câblé, un réseau ADSL 2 et/ou encore un réseau FTTH, pour « Fiber To The Home ». Dans ce cas, il est possible de définir une classe par type de réseau, chacune de ces classes représentant une valeur distincte de capacité de transmission. En effet, les terminaux respectifs de ces différents types de réseaux sont contraints dans leur transmission à des débits limités par les réseaux physiques auxquels ils appartiennent.

Dans un mode de réalisation de la présente invention, le niveau de capacité de transmission d'un terminal correspond au moins à une capacité de transmission propre au terminal considéré. Ainsi, ici on prend avantageusement en compte les capacités de transmission propres au terminal requérant lui-même pour décider d'accepter sa requête de contenu numérique ou de la refuser. On peut alors avantageusement pondérer une faible contribution au réseau P2P d'un terminal requérant qui n'a malheureusement pas la capacité de transmettre une grande quantité de données, lorsqu'au niveau d'un terminal pair on décide d'accepter sa requête.

Il est également possible de combiner les deux modes de réalisation ci-dessus, en prenant à la fois en compte non seulement les contraintes en débit imposées par le réseau physique auquel le terminal appartient, mais aussi les contraintes qui lui sont propres.

Dans un mode de réalisation de la présente invention, le premier terminal mémorise en outre des valeurs de quantité de données en association aux seconds terminaux, lesdites valeurs de quantité de données correspondant respectivement aux quantités de données relatives aux contenus numériques déjà fournies par les seconds terminaux ; et, à l'étape /2/, le premier terminal prend en outre en compte la valeur de quantité de données mémorisée en association au second terminal.

Ici, il est avantageusement prévu d'appliquer la présente invention au protocole de communication P2P qui est initialement fondé sur la prise en compte du niveau de contribution passé d'un terminal pour décider d'accepter sa requête de contenu numérique. Ainsi, dans ce mode de réalisation, chaque terminal mémorise les échanges qui ont lieu au fil du temps avec les autres terminaux du réseau P2P considéré. Il en vient donc à stocker une valeur de quantité de données de contenus numériques déjà fournies en association à chacun des terminaux depuis lesquels il a déjà reçu tout ou partie de contenus numériques.

Grâce à ces dispositions, il est possible d'appliquer des mécanismes équivalents à ceux déjà connus pour décider d'accepter une requête de contenus numériques au sein d'une même classe, tout en mettant en place une pondération entre différentes classes.

On peut notamment prévoir de gérer un tableau de terminaux par classe définie selon un mode de réalisation de la présente invention. Dans ce contexte, on peut alors aisément appliquer des mécanismes similaires à ceux appliqués dans l'art antérieur au sein d'un groupe de terminaux ayant une même classe.

En outre, il est avantageusement prévu à l'étape /2/ que le premier terminal prenne en outre en compte une valeur maximale de débit de bande passante montante.

Certains réseaux de communication P2P permettent non seulement des communications directes entre terminaux mais incluent un serveur. Ce serveur peut être en charge de répertorier notamment la ou les localisations des contenus numériques disponibles dans le réseau P2P considéré. Un tel serveur peut correspondre à un 'Tracker' dans le contexte d'un protocole P2P de type Bit Torent. Il peut alors recevoir une requête de contenu numérique d'un terminal et sélectionner une liste de terminaux pairs qui sont susceptibles de pouvoir transmettre le contenu numérique requis. Un mécanisme de la présente invention peut avantageusement être appliqué dans un réseau P2P de ce type avec un serveur.

Plus précisément, le niveau de capacité de transmission d'un terminal correspond à au moins une caractéristique de transmission attachée au terminal et dépend au moins d'un type de réseau physique sous-jacent auquel le terminal appartient.

Dans ce cas, le serveur peut avantageusement prendre en compte la capacité de transmission du terminal émetteur de la requête pour sélectionner parmi les terminaux du réseau P2P qui disposent du contenu numérique demandé, ceux qui sont le plus susceptibles d'accepter la requête du terminal au regard de la classe qui lui est alloué.

Un troisième aspect de la présente invention propose un terminal qui comprend des moyens adaptés pour la mise en œuvre d'un procédé de communication selon le premier aspect de la présente invention.

Un quatrième aspect de la présente invention propose un serveur qui comprend des moyens adaptés pour la mise en œuvre d'un procédé de communication selon le deuxième aspect de la présente invention.

Un cinquième aspect de la présente invention propose un système comprenant des terminaux selon le troisième aspect de la présente invention. Il peut également comprendre un serveur selon le quatrième aspect de la présente invention.

Un sixième aspect de la présente invention propose un programme d'ordinateur comportant des instructions pour la mise en œuvre du procédé selon le premier aspect de la présente invention, lorsque ce programme est exécuté par un processeur.

Un septième aspect de la présente invention propose un support d'enregistrement sur lequel est stocké le programme d'ordinateur selon le sixième aspect de la présente invention.

Un huitième aspect de la présente invention propose un signal de requête pour une transmission d'un contenu numérique à destination d'un terminal dans un réseau de communication pair à pair entre des terminaux selon le troisième aspect de la présente invention, des classes étant allouées respectivement auxdits terminaux, chaque classe indiquant un niveau de capacité de transmission du terminal ;
ledit signal de requête de contenu indiquant la classe allouée au terminal destinataire du contenu.

L'état de la technique le plus proche de l'invention est décrit par le document US-2008-301214. Ce document décrit un système et méthode d'échange de contenus du type peer to peer.

D'autres particularités et avantages de la présente invention apparaîtront dans la description détaillée ci-après, faite en référence aux dessins annexés sur lesquels :
- la figure 1 illustre un réseau de communication pair à pair adapté pour la mise en œuvre d'un mode de réalisation de la présente invention ;
- la figure 2 illustre les principales étapes d'un procédé de communication selon un mode de réalisation de la présente invention ; et
- la figure 3 illustre un terminal et un serveur selon des modes de réalisation de la présente invention.

Des références identiques désignent des objets identiques ou similaires d'une figure à l'autre.

La présente invention trouve des applications pertinentes dans tout type de réseau. Par la suite, sans toutefois limiter les applications possibles de la présente invention, elle est décrite dans son application à un réseau P2P hétérogène dans le sens où il repose sur une pluralité de réseaux physiques présentant des disparités respectives au regard des limitations de transmission imposées aux terminaux qui leur appartiennent. Bien entendu, la présente invention peut être avantageusement appliquée également dans un réseau P2P homogène, c'est-à-dire utilisant des ressources de transmission physiques d'un même type, notamment pour 'effacer' en quelque sorte les disparités entre des capacités propres de transmission des terminaux.

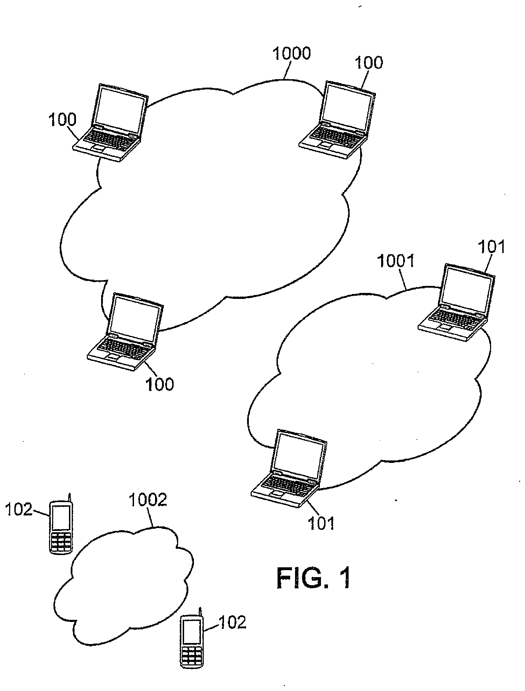

La figure 1 illustre un réseau de communication pair à pair adapté pour la mise en oeuvre d'un mode de réalisation de la présente invention. Ici, le réseau P2P considéré est par exemple fondé sur trois types de réseaux physiques distincts.

On entend par les termes 'réseau physique', ou encore 'réseau physique sous-jacent', un réseau de communication qui offre des ressources de transmission physique pour une communication selon une couche applicative. Une communication P2P est une couche applicative de communication. Le réseau P2P considéré ici repose sur un réseau 1000 de type FTTH, comprenant des terminaux 100 de type ordinateur, sur un réseau 1001 de type ADSL comprenant des terminaux 101 de type ordinateur et sur un réseau mobile 1002 de type 3G comprenant des terminaux 102 de type téléphones mobiles. Les différents réseaux physiques sous-jacents considérés ici n'imposent pas les mêmes contraintes au niveau des débits de transmission.

La présente invention est décrite ci-après dans son application à un réseau P2P de ce type, c'est-à-dire fondé sur ces trois types de réseaux physiques distincts.

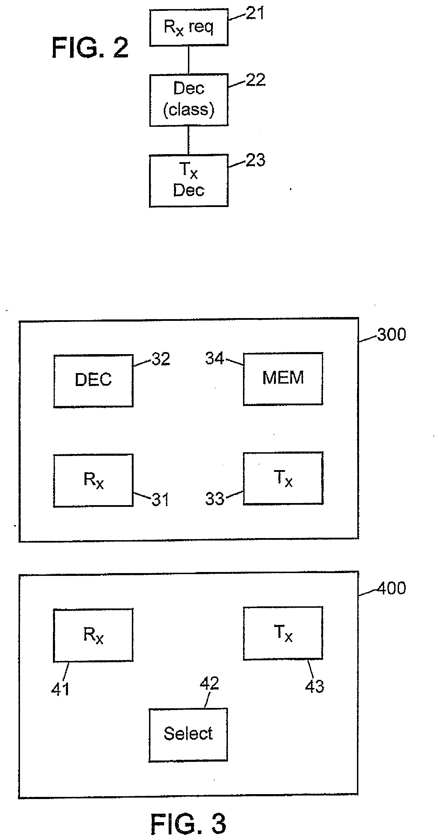

La figure 2 illustre les principales étapes d'un procédé de communication selon un mode de réalisation de la présente invention. Des classes respectives différentes sont ici allouées aux terminaux des différents réseaux physiques. Il est rappelé ici qu'une classe selon l'invention indique un niveau de capacité de transmission d'un terminal. On peut prévoir qu'une même classe soit allouée à tous les terminaux d'un même réseau physique. On peut également prévoir que différentes classes soient allouées aux terminaux d'un même réseau physique afin de prendre en considération, outre les contraintes en débit d'un réseau physique, les capacités propres des terminaux. Le niveau de capacité de transmission d'un terminal correspond ainsi à au moins une caractéristique de transmission attachée au terminal.

Au niveau d'un premier terminal, à une étape 21, on reçoit une requête pour une transmission d'un contenu numérique à destination d'un second terminal, la requête indiquant notamment la classe allouée au second terminal. Il s'agit par exemple d'une requête de contenu numérique en provenance du second terminal.

Puis, à une étape 22, on prend la décision de transmettre ou non audit second terminal au moins une partie du contenu numérique sur la base de ladite classe indiquée. Ensuite, à une étape 23, on transmet la décision au second terminal.

Le premier terminal et le second terminal peuvent appartenir à des réseaux physiques de type différent. Ainsi, le premier terminal peut par exemple correspondre à un terminal 100 de type ordinateur du réseau FTTH 1000 et le second terminal peut correspondre à un terminal 102 de type téléphone mobile du réseau mobile 1002. Dans un mode de réalisation, on peut prévoir qu'une classe différente est définie au moins par type de réseau, reflétant ainsi les limitations d'accès liées au réseau physique sous-jacent. Par exemple, la classe associée à un terminal accédant par le réseau FTTH indique une valeur de capacité de transmission supérieure à celle indiquée par la classe associée à un terminal accédant par le réseau mobile. En effet, un téléphone mobile est en général soumis à des contraintes de transmission liées à son réseau mobile. Ces contraintes peuvent donc amener un terminal 102 à transmettre moins qu'un terminal 100 de manière générale dans le réseau P2P, non pas parce qu'il ne souhaite pas contribuer plus au réseau P2P mais surtout parce qu'il n'est pas soumis aux même contraintes de débit qu'un terminal 100. Avantageusement, la présente invention peut être appliquée dans de telles conditions pour permettre à un terminal 102 de recevoir tout de même un contenu numérique dans le réseau P2P quand bien même sa contribution en transmission dans le réseau P2P n'est pas significative.

A cet effet, dans un mode de réalisation de la présente invention, le second terminal indique donc sa classe dans son message de requête de contenu numérique.

Puis, le premier terminal 100 peut décider en fonction de certains paramètres s'il donne suite à la requête du second terminal ou non. Il prend en considération la classe indiquée dans la requête. Il peut également prendre en considération la quantité de données relatives aux contenus numériques déjà reçues depuis ce second terminal. En fait, dans un mode de réalisation, la classe permet de pondérer la quantité de données de contenu numérique déjà reçue de ce terminal de sorte à ne pas pénaliser les terminaux qui n'ont que très peu transmis pour la simple raison qu'ils ne sont pas en mesure de transmettre plus, du fait de leurs capacités propres ou bien de limitations liées à leur mode d'accès.

A titre illustratif uniquement, la présente invention est décrite dans son application à un protocole de communication P2P de type Bit Torrent. A partir de ces sections, il est aisé d'en déduire une application à différents autres protocoles de communication P2P.

En effet, on peut aisément implémenter la présente invention dans le contexte de tout autre protocole de communication P2P, comme par exemple un protocole de type Peering Portai, ou encore un protocole de type RayV. Il suffit à cet effet d'introduire dans un message de requête de contenu numérique l'indication de la classe à laquelle appartient le terminal qui émet ia requête. En outre, il faut également prévoir d'appliquer une logique de décision d'acceptation ou de refus de transmission d'un contenu numérique requis selon un mode de réalisation de la présente invention au niveau des terminaux du réseau P2P considéré.

Dans un protocole de communication P2P existant, on peut aisément prévoir de définir un nouveau champ ou réutiliser un champ existant ou réservé pour permettre à un pair d'indiquer une classe qui le caractérise selon un mode de réalisation de la présente invention. Puis, on peut prévoir de modifier des algorithmes de décision d'acceptation de transmission de contenu numérique déjà mis en œuvre au niveau des terminaux du réseau de type P2P pour prendre en compte la classe dans laquelle un terminal pair se situe.

Le protocole de type Bit Torrent est adapté pour la transmission P2P de fichier mais la présente invention peut être aisément mise en œuvre au sein d'un protocole P2P qui transmet des contenus numériques de type vidéo ou de tout autre type.

Dans le contexte du protocole Bit Torrent par exemple, un terminal, dit terminal pair client dans le sens où il souhaite recevoir un contenu numérique, maintient et met à jour au fil du temps une information relative à son état pour chaque connexion qu'il établit avec un terminal pair distant, dit terminal pair serveur. Cet état peut être :
« Choked » : lorsqu'aucune requête venant du terminal client pair ne peut être satisfaite ; ou
« Interested » : lorsque le terminal pair serveur est intéressé par un contenu numérique que le terminal pair client considéré peut lui offrir. C'est une notification qui signifie que le terminal pair serveur va commencer à émettre des requêtes pour requérir tout ou partie d'un contenu numérique lorsque le terminal pair client le mettra dans l'état « unchoked».

Le terminal pair client a également besoin de savoir s'il est intéressé par le terminal pair serveur, et si pour lui le terminal pair serveur est dans l'état 'choked' ou 'unchoked'. La liste des états du terminal pair client est la suivante:
- « am_choking »: c'est-à-dire que le terminal pair client a 'choqué' le terminal pair serveur ;
- « am_interested » : c'est-à-dire que le terminal pair client est intéressé par le terminal pair serveur ;
- « peer_choking » : c'est-à-dire que le terminal pair serveur a 'choqué' le terminal pair client ;
- « peer_interested » : c'est-à-dire que le terminal pair serveur est intéressé par le terminal pair client.

De manière générale, une connexion avec un nouveau terminal commence dans l'état "choked" et "not interested".

Une partie au moins d'un contenu numérique (ou encore bloc de fichier ici) peut être transmis au terminal pair client si le terminal pair client est intéressé par un terminal pair serveur, et que ce terminal pair serveur ne le 'choque' pas.

Plus précisément, le protocole de communication entre terminaux pairs prévoit une transmission d'un premier message, référencé sous le terme 'handshake', par le terminal pair client. Dans un mode de réalisation de la présente invention, ce message indique les champs ci-dessous :
- pstrlen: Longueur de <pstr>
- pstr: identifiant du protocole
- class_id: identifiant de la classe à laquelle appartient le terminal pair client;
- info_hash: une information relative à l'application d'une fonction de hachage sur une clé ;
- peer_id: identifiant unique du terminal pair client.

En outre, de manière générale, il est prévu que selon ce protocole Bit Torent, soient gardés en mémoire les échanges réalisés entre les terminaux pairs par le passé et pris en compte des valeurs de quantité de données relatives à ces transactions passées pour décider l'acceptation ou le refus de transmission de données à des terminaux pairs.

Dans un mode de réalisation de la présente invention dans son application au protocole de type Bit Torrent, on peut prévoir que chaque terminal pair tienne à jour des listes de terminaux pairs ordonnés en fonction de leurs classes respectives. Puis, dans ce contexte, il est aisé de prévoir un algorithme d'acceptation qui soit à la fois basé sur la classe et sur les transactions passées avec un terminal pour prendre la décision d'acceptation.

On peut avantageusement prévoir de gérer une liste ou un tableau de terminaux par classe, c'est-à-dire que l'on peut prévoir de regrouper les terminaux selon leur classe, pour ensuite leur appliquer au sein d'un groupe de terminaux d'une même classe, un mécanisme similaire à un de ceux précédemment mis en œuvre dans l'art antérieur. Cet algorithme de décision peut être avantageusement adapté à chaque application mise en œuvre selon ce protocole de communication P2P.

Dans un mode de réalisation, on peut ainsi prévoir qu'un terminal autorise un certain nombre de terminaux clients à communiquer avec lui en fonction de ce qu'il peut proposer comme débit en bande passante. Par exemple, un terminal a une bande passante montante de 20 Mbit/s dans un réseau physique sous-jacent donné. On peut alors prévoir que ce terminal accepte les requêtes reçues tant que la somme des bandes passantes en réception des terminaux émetteur de la requête est inférieure à cette bande passante montante. Ainsi, lorsqu'il reçoit des requêtes de terminaux clients d'un réseau de type ADSL (le type du réseau correspondant à la classe indiquée dans la requête de contenu numérique), il peut décider d'accepter d'y donner suite en lui offrant des connexions de 2 Mbit/s. Lorsque ces requêtes proviennent de terminaux d'un réseau de type Wifi, il peut accepter d'y donner suite en offrant des connexions de 512 kbit/s. Lorsque ces requêtes proviennent de terminaux d'un réseau de type UMTS, il peut accepter d'y donner suite en offrant des connexions de 200 kbit/s. A chaque décision d'acceptation, le terminal considéré peut avantageusement contrôler la somme des débits des connexions déjà acceptées à la valeur de son débit en bande passante montante.

Dans un autre mode de réalisation particulier, le réseau de communication pair à pair comprend un serveur, agencé pour répertorier notamment la ou les localisations des contenus numériques disponibles dans le réseau de communication P2P considéré et pour fournir sur requête d'un terminal une liste de terminaux aptes à fournir au moins une partie du contenu recherché. Dans son application au protocole de type Bit Torrent, il s'agit par exemple du serveur appelé « tracker ».

Le serveur reçoit une requête pour une transmission d'un contenu numérique à destination d'un terminal, ladite requête indiquant la classe allouée au terminal et sélectionne sur la base de la classe indiquée, une liste de terminaux adaptés pour transmettre au moins une partie du contenu numérique au terminal puis fournit au terminal requérant ladite liste de terminaux.

Cet autre mode de réalisation de l'invention permet ainsi de sélectionner des terminaux aptes à fournir au moins une partie du contenu en fonction de la classe allouée au terminal requérant et ainsi alléger la charge au niveau du terminal client. En outre, on peut également se baser sur un tel serveur pour mettre en œuvre un contrôle de la classe indiquée dans la requête émise par le terminal client afin de prévenir d'éventuelles fraudes au regard de l'allocation de cette classe. Le serveur est alors être en mesure d'évaluer la capacité de transmission propre au terminal client et/ou sa capacité de transmission liée au réseau physique sous-jacent auquel il est connecté.

La figure 3 illustre un terminal et un serveur selon un mode de réalisation de la présente invention.

Le terminal comprend :
- une unité de réception 31 adaptée pour recevoir une requête pour une transmission d'un contenu numérique à destination d'un autre terminal, la requête indiquant la classe allouée à cet autre terminal ;
- une unité de décision 32 adaptée pour prendre la décision de transmettre ou non audit autre terminal au moins une partie dudit contenu numérique sur la base de ladite classe indiquée ; et
- une unité de transmission 33 adaptée pour transmettre la décision à l'autre terminal.

Le terminal peut en outre comprendre une mémoire 34 adaptée pour stocker des valeurs de quantité de données en association aux autres terminaux, les valeurs de quantité de données correspondant respectivement aux quantité de données relatives aux contenus numériques déjà fournies par les autres terminaux et l'unité de décision peut en outre être adaptée pour prendre en compte la valeur de quantité de données mémorisée en association à l'autre terminal.

Un serveur 400 selon un mode de réalisation comprend
- une unité de réception 41 adaptée pour recevoir une requête pour une transmission d'un contenu numérique à destination d'un terminal, ladite requête indiquant la classe allouée audit terminal ;
- une unité de sélection 42 adaptée pour sélectionner, sur la base de la classe indiquée, une liste de terminaux adaptés pour transmettre au moins une partie du contenu numérique au terminal ; et
- une unité de transmission 43 adaptée pour fournir au terminal ladite liste de terminaux.

## Revendications

1. Procédé de communication entre des terminaux d'un réseau de communication pair à pair ;
dans lequel des classes sont allouées respectivement auxdits terminaux ; une classe indiquant un niveau de capacité de transmission du terminal, ledit niveau de capacité de transmission d'un terminal correspondant à au moins une caractéristique de transmission attachée au terminal et dépendant au moins d'un type de réseau physique sous-jacent auquel le terminal appartient ;
ledit procédé comprenant les étapes suivantes au niveau d'un premier terminal :
/1/ recevoir (21) une requête pour une transmission d'un contenu numérique à destination d'un second terminal, ladite requête indiquant la classe allouée au second terminal ;
/2/ prendre (22) la décision de transmettre ou non audit second terminal au moins une partie dudit contenu numérique sur la base de ladite classe indiquée ; et
/3/ transmettre (23) la décision au second terminal,
dans lequel le niveau de capacité de transmission d'un terminal dépend en outre d'une capacité de transmission propre audit terminal.

2. Procédé de communication selon la revendication 1, dans lequel les terminaux du réseau de communication pair à pair appartiennent à des réseaux physiques sous-jacents de types respectifs différents.

3. Procédé de communication selon la revendication 1, dans lequel le premier terminal mémorise en outre des valeurs de quantité de données en association aux seconds terminaux, lesdites valeurs de quantité de données correspondant respectivement aux quantités de données relatives aux contenus numériques déjà fournies par les seconds terminaux ; et
dans lequel, à l'étape /2/, le premier terminal prend en outre en compte la valeur de quantité de données mémorisée en association au second terminal.

4. Procédé de communication selon la revendication 1, dans lequel, à l'étape /2/, le premier terminal prend en outre en compte une valeur maximale de débit de bande passante montante.

5. Procédé de communication entre des terminaux dans un réseau de communication pair à pair comprenant un serveur ;
dans lequel des classes sont allouées respectivement auxdits terminaux ; une classe indiquant un niveau de capacité de transmission du terminal, le niveau de capacité de transmission d'un terminal correspondant à au moins une caractéristique de transmission attachée au terminal et dépendant au moins d'un type de réseau physique sous-jacent auquel le terminal appartient ;
ledit procédé de communication comprenant les étapes suivantes au niveau du serveur :
/a/ recevoir une requête pour une transmission d'un contenu numérique à destination d'un terminal, ladite requête indiquant la classe allouée audit terminal ;
/b/ sélectionner, sur la base de la classe indiquée, une liste de terminaux adaptés pour transmettre au moins une partie du contenu numérique au terminal ; et
/c/ fournir au terminal ladite liste de terminaux
dans lequel le niveau de capacité de transmission d'un terminal dépend en outre d'une capacité de transmission propre audit terminal.

6. Terminal (300) dans un réseau de communication pair à pair comprenant une pluralité de terminaux ;
des classes sont allouées respectivement auxdits terminaux ; une classe indiquant un niveau de capacité de transmission du terminal, le niveau de capacité de transmission d'un terminal correspondant à au moins une caractéristique de transmission attachée au terminal et dépendant au moins d'un type de réseau physique sous-jacent auquel le terminal appartient ;
ledit terminal comprenant :
- une unité de réception (31) adaptée pour recevoir une requête pour une transmission d'un contenu numérique à destination d'un autre terminal, ladite requête indiquant la classe allouée audit autre terminal ;
- une unité de décision (32) adaptée pour prendre la décision de transmettre ou non audit autre terminal au moins une partie dudit contenu numérique sur la base de ladite classe indiquée ; et
- une unité de transmission (33) adaptée pour transmettre la décision audit autre terminal,
dans lequel le niveau de capacité de transmission d'un terminal dépend en outre d'une capacité de transmission propre audit terminal.

7. Terminal selon la revendication6, dans lequel le niveau de capacité de transmission dépend en outre d'une capacité de transmission propre audit terminal.

8. Terminal selon la revendication6, comprenant en outre une mémoire (34) adaptée pour stocker en outre des valeurs de quantité de données en association aux autres terminaux, lesdites valeurs de quantité de données correspondant respectivement aux quantités de données relatives aux contenus numériques déjà fournis par les autres terminaux ; et
dans lequel l'unité de décision est en outre adaptée pour prendre en compte la valeur de quantité de données mémorisée en association à l'autre terminal.

9. Serveur (400) dans lequel des classes sont allouées respectivement à des terminaux d'un réseau de communication pair à pair; une classe indiquant un niveau de capacité de transmission du terminal, le niveau de capacité de transmission d'un terminal correspondant à au moins une caractéristique de transmission attachée au terminal et dépendant au moins d'un type de réseau physique sous-jacent auquel le terminal appartient ;
ledit serveur comprenant :
- une unité de réception (41) adaptée pour recevoir une requête pour une transmission d'un contenu numérique à destination d'un terminal, ladite requête indiquant la classe allouée audit terminal ;
- une unité de sélection (42) adaptée pour sélectionner, sur la base de la classe indiquée, une liste de terminaux adaptés pour transmettre au moins une partie du contenu numérique au terminal ; et
- une unité de transmission (43) adaptée pour fournir au terminal ladite liste de terminaux,
dans lequel le niveau de capacité de transmission d'un terminal dépend en outre d'une capacité de transmission propre audit terminal.

10. Système de communication pair à pair comprenant des terminaux selon la revendication 6 et un serveur selon la revendication 9.

11. Programme d'ordinateur comportant des instructions pour la mise en œuvre du procédé selon la revendication 1, lorsque ce programme est exécuté par un processeur.

12. Support d'enregistrement sur lequel est stocké le programme d'ordinateur selon la revendication 11.

13. Signal de requête pour une transmission d'un contenu numérique à destination d'un terminal dans un réseau de communication pair à pair entre des terminaux ;
des classes étant allouées respectivement auxdits terminaux, une classe indiquant un niveau de capacité de transmission du terminal, le niveau de capacité de transmission d'un terminal correspondant à au moins une caractéristique de transmission attachée au terminal et dépendant au moins d'un type de réseau physique sous-jacent auquel le terminal appartient ;
ledit signal de requête indiquant la classe allouée au terminal destinataire du contenu numérique, dans lequel le niveau de capacité de transmission d'un terminal dépend en outre d'une capacité de transmission propre audit terminal.

## Patentansprüche

1. Verfahren zur Kommunikation zwischen Endgeräten eines Peer-to-Peer-Kommunikationsnetzwerks;
wobei Klassen jeweils den Endgeräten zugewiesen werden; wobei eine Klasse ein Übertragungskapazitätsniveau des Endgeräts angibt, wobei das Übertragungskapazitätsniveau eines Endgeräts mindestens einer Übertragungscharakteristik entspricht, die mit dem Endgerät verbunden ist, und von mindestens einem Typ eines zugrundeliegenden physischen Netzwerks abhängig ist, zu dem das Endgerät gehört;
das Verfahren umfassend die folgenden Schritte an einem ersten Endgerät:
1) Empfangen (21) einer Anforderung für eine Übertragung eines digitalen Inhalts an ein zweites Endgerät, wobei die Anforderung die Klasse angibt, die dem zweiten Endgerät zugewiesen ist;
2) Treffen (22) der Entscheidung, mindestens einen Teil des digitalen Inhalts auf der Grundlage der angegebenen Klasse an das zweite Endgerät zu übertragen oder nicht; und
3) Übertragen (23) der Entscheidung an das zweite Endgerät,
wobei das Übertragungskapazitätsniveau eines Endgeräts ferner von einer Übertragungskapazität abhängig ist, die dem Endgerät eigen ist.

2. Verfahren zur Kommunikation nach Anspruch 1, wobei die Endgeräte des Peer-to-Peer-Kommunikationsnetzwerks zu zugrundeliegenden physischen Netzwerken jeweils unterschiedlicher Typen gehören.

3. Verfahren zur Kommunikation nach Anspruch 1, wobei das erste Endgerät ferner die Datenmengenwerte in Verbindung mit den zweiten Endgeräten speichert, wobei die Datenmengenwerte jeweils den Datenmengen in Bezug auf die digitalen Inhalte entsprechen, die von den zweiten Endgeräten bereits bereitgestellt sind; und wobei bei Schritt 2) das erste Endgerät ferner den Datenmengenwert berücksichtigt, der in Verbindung mit dem zweiten Endgerät gespeichert ist.

4. Verfahren zur Kommunikation nach Anspruch 1, wobei bei Schritt 2) das erste Endgerät ferner einen maximalen Durchsatzwert einer Upstream-Bandbreite berücksichtigt.

5. Verfahren zur Kommunikation zwischen Endgeräten in einem Peer-to-Peer-Kommunikationsnetzwerk, umfassend einen Server;
wobei Klassen jeweils den Endgeräten zugewiesen werden; wobei eine Klasse ein Übertragungskapazitätsniveau des Endgeräts angibt, wobei das Übertragungskapazitätsniveau eines Endgeräts mindestens einer Übertragungscharakteristik entspricht, die mit dem Endgerät verbunden ist, und von mindestens einem Typ eines zugrundeliegenden physischen Netzwerks abhängig ist, zu dem das Endgerät gehört;
das Verfahren zur Kommunikation umfassend die folgenden Schritte am Server:
a) Empfangen einer Anforderung für eine Übertragung eines digitalen Inhalts an ein Endgerät, wobei die Anforderung die Klasse angibt, die dem Endgerät zugewiesen ist;
b) Auswählen, auf der Grundlage der angegebenen Klasse, einer Liste mit Endgeräten, die geeignet sind, mindestens einen Teil des digitalen Inhalts an das Endgerät zu übertragen; und
c) Bereitstellen, dem Endgerät, der Liste mit Endgeräten
wobei das Übertragungskapazitätsniveau eines Endgeräts ferner von einer Übertragungskapazität abhängig ist, die dem Endgerät eigen ist.

6. Endgerät (300) in einem Peer-to-Peer-Kommunikationsnetzwerk, umfassend eine Vielzahl von Endgeräten;
wobei Klassen jeweils den Endgeräten zugewiesen werden; wobei eine Klasse ein Übertragungskapazitätsniveau des Endgeräts angibt, wobei das Übertragungskapazitätsniveau eines Endgeräts mindestens einer Übertragungscharakteristik entspricht, die mit dem Endgerät verbunden ist, und von mindestens einem Typ eines zugrundeliegenden physischen Netzwerks abhängig ist, zu dem das Endgerät gehört;
das Endgerät umfassend:
- eine Empfangseinheit (31), die dafür geeignet ist, eine Anforderung für eine Übertragung eines digitalen Inhalts an ein anderes Endgerät zu empfangen, wobei die Anforderung die Klasse angibt, die dem anderen Endgerät zugewiesen ist;
- eine Entscheidungseinheit (32), die dafür geeignet ist, die Entscheidung zu treffen, mindestens einen Teil des digitalen Inhalts auf der Grundlage der angegebenen Klasse an das andere Endgerät zu übertragen oder nicht; und
- eine Übertragungseinheit (33), die dafür geeignet ist, die Entscheidung an das andere Endgerät zu übertragen,
wobei das Übertragungskapazitätsniveau eines Endgeräts ferner von einer Übertragungskapazität abhängig ist, die dem Endgerät eigen ist.

7. Endgerät nach Anspruch 6, wobei das Übertragungskapazitätsniveau ferner von einer Übertragungskapazität abhängig ist, die dem Endgerät eigen ist.

8. Endgerät nach Anspruch 6, ferner umfassend einen Speicher (34), der dafür geeignet ist, ferner Datenmengenwerte in Verbindung mit den anderen Endgeräten abzuspeichern, wobei die Datenmengenwerte jeweils den Datenmengen in Bezug auf die digitalen Inhalte entsprechen, die von den anderen Endgeräten bereits bereitgestellt sind; und
wobei die Entscheidungseinheit ferner dafür geeignet ist, den Datenmengenwert zu berücksichtigen, der in Verbindung mit dem anderen Endgerät gespeichert ist.

9. Server (400), wobei Klassen jeweils Endgeräten eines Peer-to-Peer-Kommunikationsnetzwerks zugewiesen sind; wobei eine Klasse ein Übertragungskapazitätsniveau des Endgeräts angibt, wobei das Übertragungskapazitätsniveau eines Endgeräts mindestens einer Übertragungscharakteristik entspricht, die mit dem Endgerät verbunden ist, und von mindestens einem Typ eines zugrundeliegenden physischen Netzwerks abhängig ist, zu dem das Endgerät gehört;
der Server umfassend:
eine Empfangseinheit (41), die dafür geeignet ist, eine Anforderung für eine Übertragung eines digitalen Inhalts an ein Endgerät zu empfangen, wobei die Anforderung die Klasse angibt, die dem Endgerät zugewiesen ist;
eine Auswahleinheit (42), die dafür geeignet ist, auf der Grundlage der angegebenen Klasse eine Liste mit Endgeräten auszuwählen, die dafür geeignet sind, mindestens einen Teil des digitalen Inhalts an das Endgerät zu übertragen; und
eine Übertragungseinheit (43), die dafür geeignet ist, die Liste mit Endgeräten dem Endgerät bereitzustellen, wobei das Übertragungskapazitätsniveau eines Endgeräts ferner von einer Übertragungskapazität abhängig ist, die dem Endgerät eigen ist.

10. Peer-to-Peer-Kommunikationssystem, umfassend Endgeräte nach Anspruch 6 und einen Server nach Anspruch 9.

11. Computerprogramm, umfassend Anweisungen für die Durchführung des Verfahrens nach Anspruch 1, wenn dieses Programm von einem Prozessor ausgeführt wird.

12. Speichermedium, auf dem das Computerprogramm nach Anspruch 11 abgespeichert ist.

13. Anforderungssignal für eine Übertragung eines digitalen Inhalts an ein Endgerät in einem Peer-to-Peer-Kommunikationsnetzwerk zwischen Endgeräten;
wobei Klassen jeweils den Endgeräten zugewiesen sind, wobei eine Klasse ein Übertragungskapazitätsniveau des Endgeräts angibt, wobei das Übertragungskapazitätsniveau eines Endgeräts mindestens einer Übertragungscharakteristik entspricht, die mit dem Endgerät verbunden ist, und von mindestens einem Typ eines zugrundeliegenden physischen Netzwerks abhängig ist, zu dem das Endgerät gehört;
wobei das Anforderungssignal die Klasse angibt, die dem Zielendgerät des digitalen Inhalts zugewiesen ist, wobei das Übertragungskapazitätsniveau eines Endgeräts ferner von einer Übertragungskapazität abhängig ist, die dem Endgerät eigen ist.

## Claims

1. Method for communication between terminals of a peer-to-peer communication network;
wherein classes are allocated respectively to said terminals; a class indicating a transmission capacity level of the terminal, said transmission capacity level of a terminal corresponding to at least one transmission feature attached to the terminal and depending at least on a type of underlying physical network to which the terminal belongs;
said method comprising the following steps on a first terminal:
/1/ receiving (21) a request to transmit digital content to a second terminal, said request indicating the class allocated to the second terminal;
/2/ deciding (22) to transmit or not to transmit at least a portion of said digital content to said second terminal on the basis of said indicated class; and
/3/ transmitting (23) the decision to the second terminal,
wherein the transmission capacity level of a terminal furthermore depends on a transmission capacity specific to said terminal.

2. Communication method according to Claim 1, wherein the terminals of the peer-to-peer communication network belong to underlying physical networks of different respective types.

3. Communication method according to Claim 1, wherein the first terminal furthermore stores data amount values in association with the second terminals, said data amount values corresponding respectively to the amounts of data relating to the digital content already provided by the second terminals; and
wherein, in step /2/, the first terminal furthermore takes into account the data amount value stored in association with the second terminal.

4. Communication method according to Claim 1, wherein, in step /2/, the first terminal furthermore takes into account a maximum uplink bandwidth bit rate value.

5. Method for communication between terminals in a peer-to-peer communication network comprising a server; wherein classes are allocated respectively to said terminals; a class indicating a transmission capacity level of the terminal, the transmission capacity level of a terminal corresponding to at least one transmission feature attached to the terminal and depending at least on a type of underlying physical network to which the terminal belongs;
said communication method comprising the following steps on the server:
/a/ receiving a request to transmit digital content to a terminal, said request indicating the class allocated to said terminal;
/b/ selecting, on the basis of the indicated class, a list of terminals able to transmit at least a portion of the digital content to the terminal; and
/c/ providing said list of terminals to the terminal,
wherein the transmission capacity level of a terminal furthermore depends on a transmission capacity specific to said terminal.

6. Terminal (300) in a peer-to-peer communication network comprising a plurality of terminals;
classes are allocated respectively to said terminals; a class indicating a transmission capacity level of the terminal, the transmission capacity level of a terminal corresponding to at least one transmission feature attached to the terminal and depending at least on a type of underlying physical network to which the terminal belongs;
said terminal comprising:
- a reception unit (31) designed to receive a request to transmit digital content to another terminal, said request indicating the class allocated to said other terminal;
- a decision unit (32) designed to decide to transmit or not to transmit at least a portion of said digital content to said other terminal on the basis of said indicated class; and
- a transmission unit (33) designed to transmit the decision to said other terminal,
wherein the transmission capacity level of a terminal furthermore depends on a transmission capacity specific to said terminal.

7. Terminal according to Claim 6, wherein the transmission capacity level furthermore depends on a transmission capacity specific to said terminal.

8. Terminal according to Claim 6, furthermore comprising a memory (34) furthermore designed to store data amount values in association with the other terminals, said data amount values corresponding respectively to the amounts of data relating to the digital content already provided by the other terminals; and
wherein the decision unit is furthermore designed to take into account the data amount value stored in association with the other terminal.

9. Server (400) in which classes are allocated respectively to terminals of a peer-to-peer communication network; a class indicating a transmission capacity level of the terminal, said transmission capacity level of a terminal corresponding to at least one transmission feature attached to the terminal and depending at least on a type of underlying physical network to which the terminal belongs;
said server comprising:
- a reception unit (41) designed to receive a request to transmit digital content to a terminal, said request indicating the class allocated to said terminal;
- a selection unit (42) designed to select, on the basis of the indicated class, a list of terminals able to transmit at least a portion of the digital content to the terminal; and
- a transmission unit (43) designed to provide said list of terminals to the terminal,
wherein the transmission capacity level of a terminal furthermore depends on a transmission capacity specific to said terminal.

10. Peer-to-peer communication system comprising terminals according to Claim 6 and a server according to Claim 9.

11. Computer program comprising instructions for implementing the method according to Claim 1 when this program is executed by a processor.

12. Recording medium on which the computer program according to Claim 11 is stored.

13. Request signal for transmitting digital content to a terminal in a peer-to-peer communication network between terminals;
classes being allocated respectively to said terminals, a class indicating a transmission capacity level of the terminal, the transmission capacity level of a terminal corresponding to at least one transmission feature attached to the terminal and depending at least on a type of underlying physical network to which the terminal belongs;
said request signal indicating the class allocated to the terminal receiving the digital content, wherein the transmission capacity level of a terminal furthermore depends on a transmission capacity specific to said terminal.
